# EUROPEAN PATENT SPECIFICATION

(11) **EP 3 065 211 B1**
(45) Date of publication and mention of the grant of the patent: **26.06.2019**
(21) Application number: 16156513.0
(22) Date of filing: 19.10.2012
(51) Int. Cl.: H01M 8/24, H01M 8/02, H01M 8/10, H01M 8/1018, H01M 8/241, H01M 8/0254, H01M 8/0267, H01M 8/0213, H01M 8/1004, H01M 8/0221, H01M 8/0228, H01M 8/0297, H01M 8/04029

(54) **LOW COST FUEL CELL COMPONENTS**
KOSTENGÜNSTIGE BRENNSTOFFZELLENKOMPONENTEN
COMPOSANTS DE PILE À COMBUSTIBLE À FAIBLE COÛT

(43) Date of publication of application: 07.09.2016
(62) Divisional of application: 12886650.6
(73) Proprietor: AUDI AG, 85045 Ingolstadt (DE)
(72) Inventor: Allen, Glenn M., Vernon, CT 06066 (US); Patterson, Timothy W., Jr., West Hartford, CT 06107 (US); Darling, Robert M., South Windsor, CT 06074 (US); Madden, Thomas H., Glastonbury, CT 06033 (US)

(56) References cited:
- EP-A1- 1 699 100
- EP-A2- 1 099 266
- US-A1- 2004 018 412
- US-A1- 2006 068 265
- US-A1- 2008 220 154

## Description

### Technical Field

The invention relates to a method for forming cooler plates and fuel cell stacks. The invention further relates to cooler plates and fuel cell stacks.

### Background Art

Proton exchange membrane (PEM) fuel cells have advantageously been provided with porous, hydrophilic reactant gas flow field plates, typically with either the fuel or oxidant reactant gas plate having coolant flow field channels provided as grooves extending inward from the surface opposite to the surface having reactant gas flow field grooves formed therein. These have been referred to as water transport plates. In many instances, the grooves forming flow fields have been shaped to provide various operational objectives. Provision of shaped grooves, with sufficient dimensional tolerance, has required end milling, or similar processes which are time-consuming and expensive. Provision of coolant grooves on opposite sides of flow field plates from reactant grooves also require the use of end mills for precise depth and positioning.

Usage of porous, hydrophilic reactant and coolant flow plates have proven to be particularly advantageous in fuel cells providing energy to drive electric vehicles. However, the utilization in commonly available vehicles is subject to extreme cost restraints in comparison with other fuel cell applications.

A large percentage of the cost of fuel cells currently powering electric vehicles is the cost of producing the reactant and/or coolant flow field plates.

EP 1 699 100 A1 describes the cooling of a stack of fuel cell. The liquid coolant, which has cooled the fuel cell stack, vaporizes and is condensed by a condenser. The cooling plates used herein are formed as continuous corrugated plates. US2008/0220154 discloses a method of forming a plate comprising partially impregnating a graphite sheet with a first liquid resin; deforming at least one surface of said sheet; impregnating said sheet with a second liquid resin; and curing. EP1099266 discloses a method of forming a plate comprising stamping a sheet of graphite, followed by impregnation with a phenolic resin and curing under heat and pressure.

### Summary

Reactant and/or coolant flow field plates are provided with processes which eliminate the need for end milling or other expensive manufacturing steps. One particular cost reducing provision herein is utilizing either flow field plates having only straight grooves extruded therein for flow channels, grooving flat plates with gang or arbor milling to accomplish flow channels, impregnating water-pervious flow field plates with hydrophobic coolant channel demarcations, or stamping of components with rotary dies to provide coolant-flowing voids or corrugations.

For example, fuel flow plates can be made by extruding flat porous, hydrophilic carbonaceous sheets, either a) with the flow field channels provided by the extrusion die or b) extruded flat, followed by gang or arbor milling of channels. Long sheets are extruded and/or milled and then cut into proper size for use in a designated fuel cell.

For example, oxidant flow fields can be similarly extruded with channels provided in the extrusion die, or as long flat sheets followed by gang or arbor milling of straight flow fields. Thereafter, the extruded and/or milled sheets with straight flow fields are trimmed at an angle to provide successive elements having edges which are at a nominal angle with respect to flow channels of each piece, to accommodate coolant flow channels.

For example, a cooler plate can be made by rotary die, cutting two layers: one providing voids forming straight coolant flow channels, and the other providing voids forming inlet and exit header channels, the two layers being superposed when in place for use. In an alternative to this embodiment, the two layers may be bonded together before utilization in a fuel cell stack.

In another example, a cooler plate can be is made by stamping a metal sheet in a corrugated fashion so as to provide coolant channels which are open to both reactant flow surfaces, when inserted therebetween.

In an embodiment, a coolant flow field plate is made by impregnating a carbonaceous porous, hydrophilic substrate with hydrophobic material, such as a polymer, so as to delineate channels in the substrate, thereby directing the flow of water or other coolant as desired.

Other variations will become more apparent in the light of the following detailed description of exemplary embodiments, as illustrated in the accompanying drawings.

### Brief Description of the Drawings

Fig. 1, which is not part of the invention, is a simplified plan view of an elongated strip of extruded porous, hydrophilic carbonaceous substrate material, with straight fuel flow channels formed therein either by the extrusion die or gang milled or arbor milled after being extruded in a flat form.
Fig. 2, which is not part of the invention, is a simplified plan view of an elongated sheet of porous, hydrophilic carbonaceous substrate material suitable for use as a plurality of oxidant reactant gas flow field plates, illustrating the manner of cutting same, the sheet being extruded with straight grooves forming reactant flow channels, or having straight grooves gang milled or arbor milled after being extruded flat.
Fig. 3 is a plan view of a porous, hydrophilic coolant plate wherein the coolant flow paths are formed by hydrophobic barriers, such as a polymer, impregnated therein.
Fig. 4, which is not part of the invention, is a plan view of one layer of a cooler plate formed of a solid sheet by punching out voids in which coolant is to flow.
Fig. 5, which is not part of the invention, is a plan view of a second layer of the cooler plate of Fig. 4 with voids forming the inlet and exit headers stamped out of a solid sheet.
Fig. 6, which is not part of the invention, is a simplified cross sectional view of a stamped, corrugated cooler plate providing coolant channels to both the fuel flow field plate and the oxidant flow field plate.

### Mode(s) of Implementation

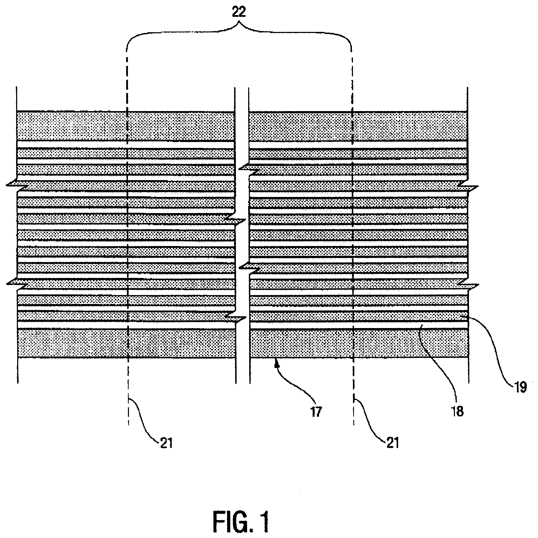

Referring now to Fig. 1 , an elongated sheet of porous hydrophilic carbonaceous material 17 includes straight grooves 18 separated by ridges 19 which are either formed therein by the extrusion die during an extrusion process, or formed therein by gang milling or arbor milling after the sheet 17 has been extruded in a plain, flat shape. Having the grooves straight permits forming them during extrusion, and also permits forming the grooves using high speed, low cost gang milling or arbor milling. The sheet 17 is thereafter cut, orthogonally with respect to the grooves 28, along the dashed lines 21 utilizing any suitable process such as rotary slicing or end milling to form a plurality of single fuel flow field plates 22.

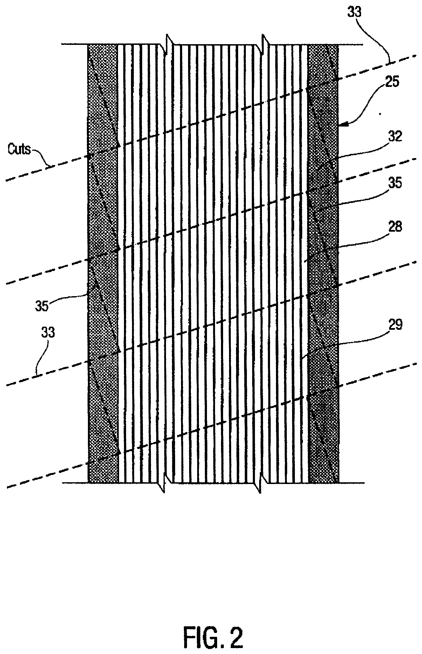

In Fig. 2, an elongated, porous, hydrophilic carbonaceous sheet 25 has a plurality of straight grooves 28 separated by ridges 29 formed therein either during the extrusion process, or after the sheet is extruded in a flat form, by arbor milling or gang milling. Thereafter, the sheet 25 may be cut, at an angle with respect to the grooves 28, into a plurality of individual oxidant flow field plates 32 as indicated by dashed lines 33. Even though the grooves 28 may need to be at an angle compared to the edges 35 of each oxidant flow field plate 32, this is easily accommodated by first forming the elongated sheet 25 with straight grooves, either by gang or arbor milling or by extrusion, and thereafter, cutting the flow fields at an angle with respect to the grooves.

Cooler plates may be formed by extrusion with or without additional milling as described with respect to Figs. 1 and 2 hereinbefore if found desirable in any particular implementation of a fuel cell stack.

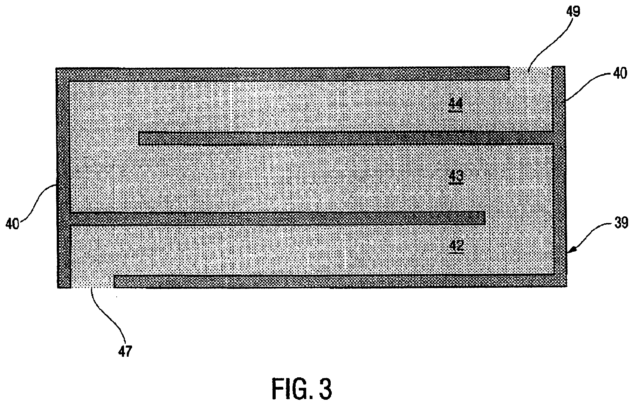

Fig. 3 illustrates a cooler plate 39, wherein the areas 40 are impregnated with hydrophobic material, such as PTFE or other polymer. The hydrophobicity of the impregnated areas channel the coolant into passageways 42-44 from an inlet 47 to an exit 49. The hydrophobic coolant channel demarcations may be easily formed by first applying a suitable mask, which may be a mask representing a large number of cooler plates, after which a suitable polymer can be overlaid or sprayed on the masked material and then heated to above the melting point of the polymer, under pressure if necessary in any case, and then cooled to the solidification temperature of the polymer while still under pressure, in accordance with known techniques.

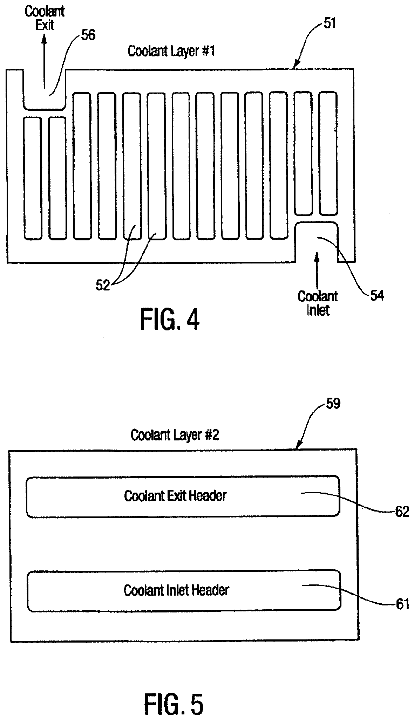

Another form of cooler plate is illustrated in Figs. 4 and 5. In Fig. 4, a first coolant flow channel layer 51 has coolant channel voids 52 stamped therethrough. The layer 51 may be thin stainless steel, nickel, or other suitable metal, or a water impervious carbonaceous sheet typical of those used in fuel cells. The stamping also provides a coolant inlet void 54 and a coolant exit void 56. A second layer 59 of the cooler plate is provided by stamping voids to create a coolant inlet header 61 and a coolant exit header 62. When the layer 59 of Fig. 5 is juxtaposed over the layer 51 of Fig. 4, a cooler plate is formed. The two layers may be adhered together, such as by any form of bonding, or may simply be juxtapositioned in the assembly of a fuel cell stack.

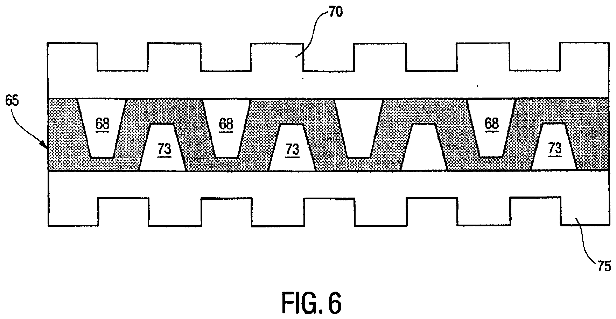

Another simple form of cooler plate 65 is illustrated in Fig. 6. The plate 65 is stamped into a corrugated shape that provides coolant flow passageways 68 adjacent a porous, hydrophilic cathode flow field plate 70, and coolant passageways 73 adjacent a porous, hydrophilic anode flow field plate 75. The ends of the corrugations may be crimped or they may be filled with suitable seal material of the type heretofore used in fuel cells.

The various reactant flow field plates and cooler plates may be used in selected combinations to be effective in any given implementation of a fuel cell stack therewith. The fuel reactant flow field plates may each be disposed on one side of a related one of a plurality of membrane electrode assemblies (MEAs), the oxidant reactant flow field plates may each be disposed on a second side of the MEAs, and the cooler plates may be disposed between oxidant and fuel flow field plates, to form a fuel cell stack.

The invention is further defined by the following clauses:
12. A method of forming a fuel cell cooler plate characterized by impregnating a sheet of material which is substantially permeable to liquid water, the impregnation comprising hydrophobic material laid out in a pattern which defines, between the hydrophobic material, channels for guiding the flow of liquid coolant.
13. A method according to clause 12 further characterized in that: the hydrophobic material comprises polytetrafluoroethylene (PTFE).

The following clauses relate to embodiments which are not part of the invention:
1. A method characterized by:forming a fuel cell fluid flow field plate (22, 32) by extruding carbonaceous elongated sheets of material wherein either a) the extrusion die is configured to create straight grooves in the extruded, elongated sheets, or b) the extrusion die provides an elongated flat sheets of material and the method further comprises gang milling or arbor milling straight grooves into the elongated sheets of material;thereafter cutting some of said elongated sheets of material having grooves orthogonally with respect to the grooves, into a plurality of pieces to form fuel reactant gas flow field plates, and cutting others of said elongated sheets of material having grooves into a plurality of pieces with edges thereof at an angle with respect to said grooves to form a plurality of oxidant reactant gas flow field plates;
   providing cooler plates of thin sheet material, said material comprising a material impervious to liquid water stamped so as to define coolant channels therein; and disposing each of a plurality of membrane electrode assemblies between first sides of one of said fuel reactant gas flow field plates and one of said oxidant reactant gas flow field plates, with one of said cooler plates disposed between second sides of said reactant gas flow field plates, to form a fuel cell stack.2. A fuel cell stack manufactured by a process including the method of clause 1.3. A method characterized by:forming a fuel cell fluid flow field plate (22, 32) by extruding carbonaceous elongated sheets of material wherein either a) the extrusion die is configured to create straight grooves in the extruded, elongated sheet, or b) the extrusion die provides an elongated flat sheet of material and the method further comprises gang milling or arbor milling straight grooves into the elongated sheet of material; and thereafter cutting the elongated sheets of material to provide flow field plates of desired size for fuel cell stacks.4. A method according to clause 3 further characterized in that: said sheet of elongated carbonaceous material is porous and hydrophilic, and said grooves comprise reactant gas flow fields.5. A method according to clause 4 further characterized in that: said elongated sheet of material having grooves is thereafter cut, orthogonally with respect to the grooves, into a plurality of pieces to form fuel reactant gas flow field plates.6. A plurality of fuel reactant flow fields manufactured by a process including the method of clause 5.7. A method according to clause 4 further characterized in that: said elongated sheet of material having grooves is thereafter cut into a plurality of pieces with edges thereof at an angle with respect to said grooves to form a plurality of oxidant reactant flow field plates.8. A plurality of oxidant reactant gas flow field plates manufactured by a process including the method of clause 7.
9. A method according to clause 3 further characterized in that: said sheet of elongated carbonaceous material is impervious to water and said grooves comprise coolant grooves.10. A method according to clause 3 wherein said elongated sheet of carbonaceous material is impervious to liquid water and is cut into a plurality of pieces for use as cooler plates in a fuel cell stack.11. A plurality of cooler plates manufactured by a process including the method of clause 10.
14. A cooler plate manufactured by a process including the method of clause 10.15. A method of forming a cooler plate characterized by:forming a first layer by stamping a thin sheet of water impervious material suited for use in a fuel cell so as to provide voids that demarcate coolant flow channels having an inlet and an exit; and forming a second layer by stamping a sheet of water impervious material suitable for use in a fuel cell so as to provide voids which, with respect to the voids of said first layer, form a coolant inlet header and a coolant exit header; and juxtaposing said two layers adjacent each other so that the inlet void of the first layer is adjacent the coolant inlet header void of said second layer, the voids that demarcate coolant flow paths in the first layer each having a first end adjacent the coolant inlet void of said second layer and a second end adjacent the coolant exit header void of the second layer, which in turn is adjacent the coolant exit void in said first layer. 16. A method according to clause 15 further characterized in that said first layer is formed by stamping a thin sheet of water impervious material suited for use in a fuel cell so as to provide voids that demarcate including said coolant channels.
17. A method characterized by:providing cooler plates of thin sheet material, said material comprising a material impervious to liquid water stamped so as to define coolant channels therein; and disposing each of said sheets of material between respective reactant flow field plates of a plurality of adjacent fuel cells so as to further confine the flow of coolant and to thereby form a fuel cell stack. 18. A fuel cell stack manufactured by a process including the method of clause 17.19. A method according to clause 17 further characterized in that sheets of material impervious to liquid water are stamped to provide voids defining coolant flow passageways.20. A method according to clause 17 further characterized in that sheets of material impervious to liquid water are stamped to corrugate the material thereby providing separate coolant channels in contact with the respective reactant flow field plates of each of the adjacent fuel cells.

Since changes and variations of the disclosed embodiments may be made without departing from the concept's intent, it is not intended to limit the disclosure other than as required by the appended claims.

## Claims

1. A method of forming a fuel cell cooler plate (39) from a material that is permeable to liquid water, comprising impregnating sheet of material, **characterised in that** the impregnation comprises hydrophobic material laid out in a pattern which defines, between the hydrophobic material, channels (42, 43, 44) for guiding the flow of liquid coolant.

2. The method according to claim 1 further **characterized in that:** the hydrophobic material comprises polytetrafluoroethylene (PTFE).

3. A cooler plate of thin sheet material, said material comprising material pervious to liquid water having hydrophobic material impregnated therein, **characterised in that** said hydrophobic material defines coolant channels (42, 43, 44), said cooler plate constituting a cooler plate obtainable by a method according to claim 1 or 2.

4. A method for forming a fuel cell stack, the method comprising:
providing cooler plates (39) of thin sheet material, said material comprising material pervious to liquid water having hydrophobic material impregnated therein so as to define coolant channels (42, 43, 44); and
disposing each of said sheets of material between respective reactant flow field plates (22; 32) of a plurality of adjacent fuel cells so as to further confine the flow of coolant and to thereby form said fuel cell stack.

5. A fuel cell stack comprising a cooler plate (39) according to claim 3.

6. The fuel cell stack according to claim 5, **characterized in that** it is obtainable by a process including the method of claim 4.

## Patentansprüche

1. Verfahren zum Bilden einer Brennstoffzellenkühlerplatte (39) aus einem Material, das für flüssiges Wasser permeabel ist, umfassend ein Imprägnieren eines Blechs von Material, **dadurch gekennzeichnet, dass** die Imprägnierung hydrophobes Material umfasst, das in einem Muster ausgelegt ist, das zwischen dem hydrophoben Material Kanäle (42, 43, 44) zum Führen des Stroms von flüssigem Kühlmittel definiert.

2. Verfahren nach Anspruch 1, weiter **dadurch gekennzeichnet, dass**: das hydrophobe Material Polytetrafluorethylen (PTFE) umfasst.

3. Kühlerplatte aus dünnem Blechmaterial, wobei das Material ein für flüssiges Wasser durchlässiges Material umfasst, das hydrophobes Material darinimprägniert aufweist, **dadurch gekennzeichnet, dass** das hydrophobe Material Kühlmittelkanäle (42, 43, 44) definiert, wobei die Kühlerplatte eine Kühlerplatte darstellt, die durch ein Verfahren nach Anspruch 1 oder 2 erhaltbar ist.

4. Verfahren zum Bilden eines Brennstoffzellenstapels, wobei das Verfahren ein Bereitstellen von Kühlerplatten (39) aus dünnem Blechmaterial umfasst, wobei das Material ein für flüssiges Wasser durchlässiges Material umfasst, das hydrophobes Material darinimprägniert aufweist, so dass Kühlkanäle (42, 43, 44) definiert werden; und
Anordnen jedes der Bleche aus Material zwischen jeweiligen Reaktantströmungsfeldplatten (22; 32) eine Mehrzahl von benachbarten Brennstoffzellen, so dass die Strömung von Kühlmittel weiter begrenzt wird, und dadurch der Brennstoffzellenstapel gebildet wird.

5. Brennstoffzellenstapel, umfassend eine Kühlerplatte (39) nach Anspruch 3.

6. Brennstoffzellenstapel nach Anspruch 5, **dadurch gekennzeichnet, dass** er durch einen Prozess erhaltbar ist, der das Verfahren nach Anspruch 4 beinhaltet.

## Revendications

1. Procédé de formation d'une plaque de refroidisseur de pile à combustible (39) à partir d'un matériau qui est perméable à l'eau liquide, **comprenant** l'imprégnation d'une feuille de matériau, **caractérisé en ce que** l'imprégnation comprend la présentation d'un matériau hydrophobe selon un motif qui définit, entre le matériau hydrophobe, des canaux (42, 43, 44) pour guider l'écoulement de réfrigérant liquide.

2. Procédé selon la revendication 1 en outre **caractérisé en ce que :** le matériau hydrophobe comprend du polytétrafluoroéthylène (PTFE).

3. Plaque de refroidisseur en matériau en feuille mince, ledit matériau comprenant un matériau perméable à l'eau liquide ayant un matériau hydrophobe imprégné en son sein, **caractérisé en ce que** ledit matériau hydrophobe définit des canaux de réfrigérant (42, 43, 44), ladite plaque de refroidisseur constituant une plaque de refroidisseur pouvant être obtenue par un procédé selon la revendication 1 ou 2.

4. Procédé de formation d'un empilement de piles à combustible, le procédé comprenant :
la fourniture de plaques de refroidisseur (39) en matériau en feuille mince, ledit matériau comprenant un matériau perméable à l'eau liquide ayant un matériau hydrophobe imprégné en son sein afin de définir des canaux de réfrigérant (42, 43, 44) ; et
la disposition de chacune desdites feuilles de matériau entre des plaques de champ d'écoulement de réactif respectives (22 ; 32) d'une pluralité de piles à combustible adjacentes afin de confiner davantage l'écoulement de réfrigérant et de former ainsi ledit empilement de piles à combustible.

5. Empilement de piles à combustible comprenant une plaque de refroidisseur (39) selon la revendication 3.

6. Empilement de piles à combustible selon la revendication 5, **caractérisé en ce qu'il** peut être obtenu par un processus incluant le procédé selon la revendication 4.
